# EUROPEAN PATENT SPECIFICATION

(11) **EP 3 227 071 B1**
(45) Date of publication and mention of the grant of the patent: **02.03.2022**
(21) Application number: 15865472.3
(22) Date of filing: 30.11.2015
(51) Int. Cl.: B27B 5/29, B27B 5/16, F16H 1/16, F16J 15/16, F16H 57/04, F16H 57/029, F16H 57/039

(54) **TABLE SAW AND METHOD OF OPERATING A TABLE SAW**
TISCHSÄGE UND VERFAHREN ZUM BETREIBEN EINER TISCHSÄGE
SCIE À TABLE ET MÉTHODE D'ACTIONNEMENT D'UNE SCIE À TABLE

(30) Priority: 02.12.2014 US 201462086404 P
(43) Date of publication of application: 11.10.2017
(73) Proprietor: Robert Bosch GmbH, 70442 Stuttgart (DE)
(72) Inventor: FROLOV, Andrew, Glenview, IL 60025 (US); KIVLITSKYY, Volodymyr, Chicago, IL 60660 (US)
(86) International application number: PCT/US2015/062982
(87) International publication number: WO 2016/089764

(56) References cited:
- WO-A1-94/25769
- WO-A1-94/25769
- CN-U- 202 195 043
- FR-A1- 2 813 266
- FR-A2- 2 265 487
- US-A- 1 032 724
- US-A- 1 900 553
- US-A- 4 694 721
- US-A- 6 000 140
- US-A1- 2004 113 366
- US-A1- 2012 319 358

## Description

This application claims the benefit of priority of U.S. provisional application serial no. 62/086,404, filed on December 2, 2014.

### Field

This disclosure relates to the field of power tools and more particularly to power tools including a worm drive gear configuration for driving a cutting instrument.

### Background

Numerous power tools have been developed to facilitate forming a workpiece into a desired shape. One such power tool for forming a workpiece is a table saw. Craftsman typically use table saws to cross-cut and rip-cut workpieces, such as hardwood, wood products, construction lumber, and other materials.

Most table saws include a workpiece support surface and a cutting blade that extends through an opening in the workpiece support surface. The workpiece support surface is a generally flat surface on which a user positions the workpiece for cutting. The cutting blade, typically a circular saw blade, is configured for rotation by an electric motor that is positioned below the support surface. An upper portion of the blade extends above the support surface through the opening in the support surface and is configured to contact the workpiece.

Some table saws include a geared drivetrain that transmits torque from the electric motor to the cutting blade. One type of geared drivetrain, referred to as a "worm drive powertrain," includes a worm meshed with a worm gear. The worm is typically mounted to the motor shaft and the worm gear is typically mounted to an arbor shaft that supports the cutting blade. The worm drive, in most arrangements, is configured to reduce the rotational speed of the cutting blade, as compared to the rotational speed of the motor shaft, and to increase the torque delivered to the cutting blade, resulting in a powerful cutting tool that easily and reliably cuts through tough and/or thick workpieces.

The typical worm drive is lubricated in order to reduce friction, noise, and heat generated at the worm and the worm gear. For example, a worm drive may be partially bathed in oil to lubricate the worm and the worm gear. The lubricant greatly extends the usable life of the worm drive.

In some table saws, rotation of the worm directs lubricant as well as debris suspended in the lubricant against seal members and other fluid retention features of the table saw. In response to prolonged usage of the table saw, the force of the lubricant and the debris imparted against the seal members may adversely affect the seal members potentially resulting in a seal failure.

Additionally, in some table saws the worm drive is movable to a position in which the lubricant fails to adequately lubricate the worm drive during operation of the table saw. As a result, prolonged usage of the table saw with the worm drive in such a position may result in excessive wear of the worm drive, thereby reducing the usable life of the worm drive.

In view of the foregoing, it would be advantageous to provide a table saw including a worm drive configured to prevent damage to the seal members and that is sufficiently lubricated in each operating position.

FR 2813266 A1 discloses a gear having a tooth region in the central region of the gear and support regions at the ends, wherein substantially frustoconical guide parts with inclined regions for conducting lubricant are attached to the tooth region or to the support regions, the surfaces of the guide parts having a smaller diameter facing the center in the axial direction of the tooth region.

US 1900553 A discloses a portable motor driven tool assembly including a handle for the assembly and a driving motor, a motor-circuit-controlling switch located adjacent to the handle to be grasped by the operator in holding and guiding the tool by said handle, a second motorcircuit-controlling switch in series circuit with said first switch, and means for closing said second switch upon pressing' said tool and material to be operated on thereby into close operating engagement.

US 1032724 A discloses a combination with a case containing oil, a rotary member which is located in said case above the oil and has a bearing at one end.

WO/9425769 A1 discloses a sealing system for sealing an input shaft in a gear reducer housing with a shaft input opening, said shaft being supported in said reducer housing on at least one bearing assembly in said opening at said input side, said sealing system comprising: a seal arranged in said shaft input opening for surrounding said input shaft, said seal being located between said at least one bearing assembly and the interior of said gear reducer housing whereby said seal will be exposed to lubricant from the interior of said gear reducer housing but such lubricant will be prevented from leaking from said housing at said shaft input opening.

CN 202195043 U discloses a flange sealing mechanism for a worm gear, comprising a housing, said housing is provided with a worm, said housing input flange is provided with a side wall, the worm to take over the drive flange through, said input flange of the box is fixed, said the input flange and the worm by a seal with sealing, by sealing with O-ring between the input flange of the box, the worm on a bearing sleeve, said bearing and the input flange with touching.

FR 2 265 487 A2 describes a worm drive arrangement for a table saw.

### Summary

According to the invention, a table saw having the features of claim 1 is provided.

Also according to the invention, a method of operating a table saw having the features of claim 13 is provided.

### Brief Description of the Figures

The above-described features and advantages, as well as others, should become more readily apparent to those of ordinary skill in the art by reference to the following detailed description and the accompanying figures in which:
FIG. 1 is a perspective view of a table saw as disclosed herein;
FIG. 2 is a left side elevational view of a portion of the table saw of FIG. 1;
FIG. 3 is a cross sectional view of a portion of the table saw of FIG. 1, showing a cutting assembly of the table saw;
FIG. 4 is a cross sectional view of a portion of the cutting assembly of FIG. 3;
FIG. 5 is another cross sectional view of a portion of the cutting assembly of FIG. 3;
FIG. 6 is a perspective view of a supporting ring of the cutting assembly of FIG. 3;
FIG. 7 is a perspective view of a shield member of the cutting assembly of FIG. 3;
FIG. 8 is a perspective view of another embodiment of a shield member of the cutting assembly of FIG. 3;
FIG. 9 is a side elevational view of another table saw, as disclosed herein, including a cutting assembly positioned near a position of maximum cutting depth;
FIG. 10 is a cross sectional view of the cutting assembly of FIG. 9 positioned near the position of maximum cutting depth;
FIG. 11 is a perspective view of a portion of the cutting assembly of FIG. 9;
FIG. 12 is a perspective view of a shield member of the cutting assembly of FIG. 9;
FIG. 13 is another perspective view of the shield member of FIG. 12;
FIG. 14 is a perspective view of an impeller of the cutting assembly of FIG. 9;
FIG. 15 is a side elevational view of the table saw of FIG. 9, with the cutting assembly near a position of minimum cutting depth;
FIG. 16 is a cross sectional view of the cutting assembly of FIG. 9 positioned near the position of minimum cutting depth;
FIG. 17 is a perspective view of another embodiment of an impeller of the cutting assembly of FIG. 9;
FIG. 18 is a front elevational view of the impeller of FIG. 17;
FIG. 19 is a perspective view of another embodiment of an impeller of the cutting assembly of FIG. 9;
FIG. 20 is a perspective view of the impeller of FIG. 19;
FIG. 21 is a perspective view of a first portion of the impeller of FIG. 19; and
FIG. 22 is a perspective view of a second portion of the impeller of FIG. 19.

### Detailed Description

For the purpose of promoting an understanding of the principles of the disclosure, reference will now be made to the embodiments illustrated in the drawings and described in the following written specification. It is understood that no limitation to the scope of the disclosure is thereby intended. It is further understood that this disclosure includes any alterations and modifications to the illustrated embodiments and includes further applications of the principles of the disclosure as would normally occur to one skilled in the art to which this disclosure pertains.

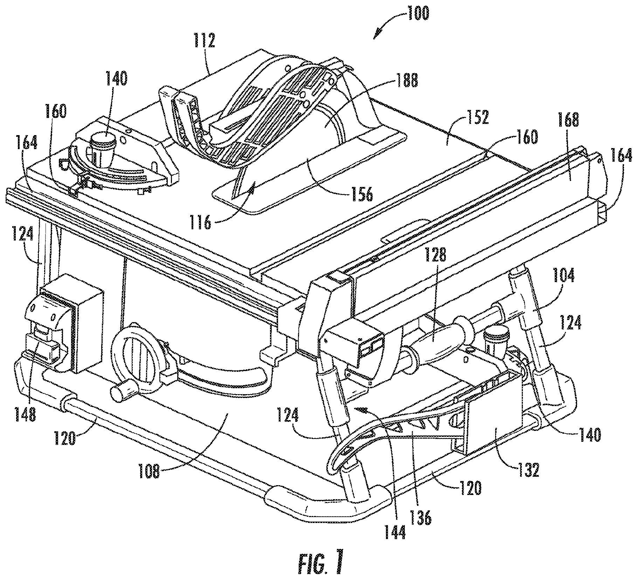

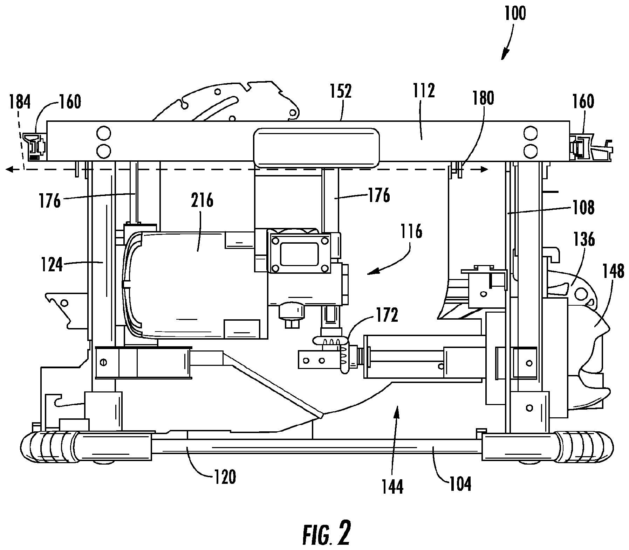

As shown in FIGs. 1-3, a power tool shown as a table saw 100 includes a frame 104 configured to support an enclosure 108, a tabletop 112, and a cutting assembly 116. The frame 104 is configured for placement on a stand, or other structure (not shown), and includes base elements 120 and support structures 124 extending from the base elements. The frame 104 further includes a handle 128 (FIG. 1) extending between two of the support structures 124, thereby making the table saw 100 a jobsite table saw that is easily portable by a user. Additionally, the frame 104 includes a plurality of storage structures 132 (FIG. 1) for storing a push stick 136 (FIGs. 1 and 2) and other accessories such as a miter gauge 140 (FIG. 1). In other embodiments, the table saw 100 may be provided as a non-portable cabinet style table saw or any other type of table saw.

The enclosure 108 defines an internal space 144, which houses various components of the table saw 100 including a portion of the cutting assembly 116. The enclosure 108 supports a power switch 148 (FIGs. 1 and 2) for activating the cutting assembly 116.

The tabletop 112 is connected to the frame 104 and the enclosure 108. An upper surface of the tabletop 112 defines a workpiece support surface 152 and a cutting blade opening 156 (FIG. 1). The workpiece support surface 152 is substantially flat and supports a workpiece (not shown) to be cut or shaped by the cutting assembly 116. The tabletop 112 also defines grooves 160 (FIG. 1) configured to receive and guide the miter gauge 140. A rail structure 164 located at the front and back of the tabletop 112 is connected to the tabletop 112 and is configured to support a rip fence 168 (FIG. 1 only).

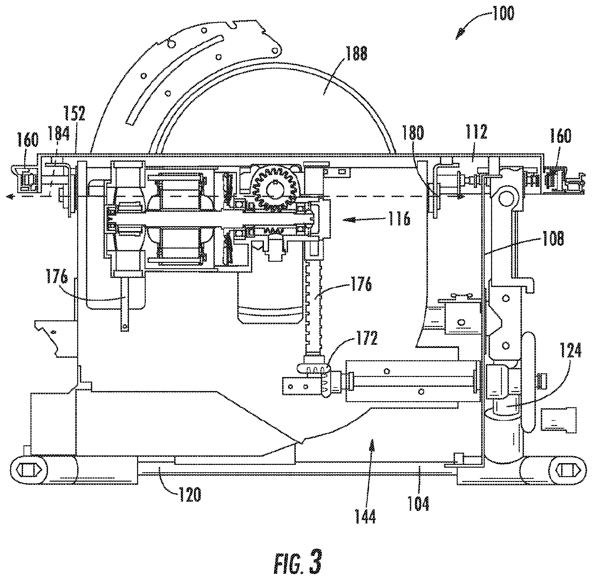

As shown in FIGs. 2 and 3, the cutting assembly 116 is supported within the internal space 144 of the enclosure 108 by an adjustment mechanism 172 that includes height rails 176 and a pivot shaft 180 defining a pivot axis 184. Additionally, the cutting assembly 116 is configured to support rotatably a cutting blade 188 (FIG. 3, typically a circular saw blade). The cutting assembly 116 is configured to slide toward and away from the tabletop 112 along the height rails 176 to adjust a cutting depth of the cutting blade 188. Additionally, the cutting assembly 116 is configured to pivot about the pivot axis 184 to adjust a bevel angle of the cutting blade 188.

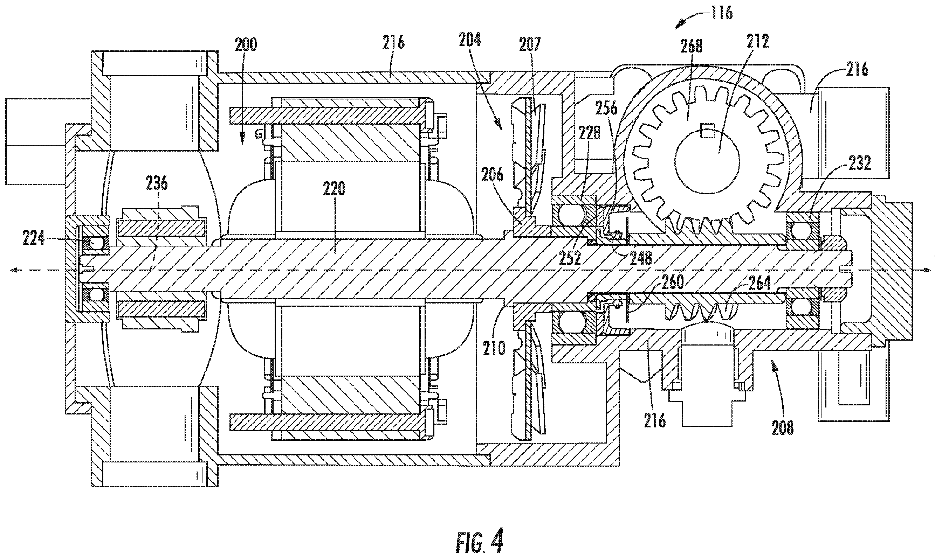

With reference to FIG. 4, the cutting assembly 116 includes an electric motor 200, a cooling fan 204, a worm drive assembly 208, and an arbor assembly 212 each at least partially located within a gear housing 216. The electric motor 200 includes a driveshaft 220 that is mounted for rotation relative to the housing 216. The electric motor 200 is configured to rotate the driveshaft 220 relative to the housing 216 when the electric motor is energized. Bearing members 224, 228, 232 are configured to rotatably support the driveshaft 220, which defines a longitudinal axis 236.

The cooling fan 204 is fixedly mounted on the driveshaft 220 between the electric motor 200 and the bearing member 228. The cooling fan 204 includes a hub 206 and a plurality of blades 207 mounted on the hub. The hub 206 is press-fit or slip-fit onto the driveshaft 220 against a shoulder 210 of the driveshaft 220. The cooling fan 204 is configured to rotate relative to the housing 216 in response to the electric motor 200 being energized. The blades 207 of the cooling fan 204 are configured to generate an airflow across the electrical motor 200 during operation thereof to cool the electrical motor 200.

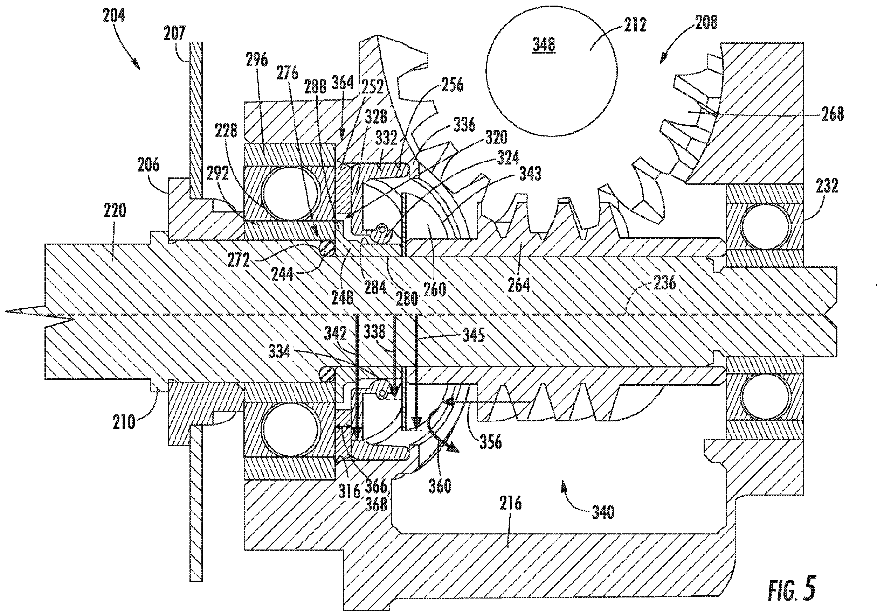

As shown in FIG. 5, the worm drive assembly 208 includes an o-ring seal 244, a collar 248, a seal support member 252, a seal member 256, a shield member 260, a worm 264, and a worm gear 268. The o-ring seal 244 is seated against a shoulder 272 defined by the driveshaft 220 and is located between the collar 248 and the shoulder 272. The o-ring seal 244 is positioned against the driveshaft 220, the shoulder 272, the collar 248, and the bearing member 228. The o-ring seal 244 is configured to form a fluid tight seal at a junction 276 between the bearing member 228 and the driveshaft 220, thereby preventing lubrication from seeping between the driveshaft 220 and the bearing member 228 and contacting the hub 206 of the fan 204.

The collar 248 is mounted on the driveshaft 220 and includes a bearing surface 280 positioned against the driveshaft 220, an opposite seal surface 284 spaced apart from the driveshaft 220, and a flange 288 positioned against the bearing member 228 and the o-ring seal 244. In the exemplary embodiment of FIG. 5, the flange 288 is positioned against an inner race 292 of the bearing member 228, which is configured for rotation relative to an outer race 296 of the bearing member 228 during operation of the electric motor 200. The collar 248, which is also referred to herein as a bushing, is configured to rotate with the driveshaft 220 in response to the electric motor 200 being energized, in at least one embodiment.

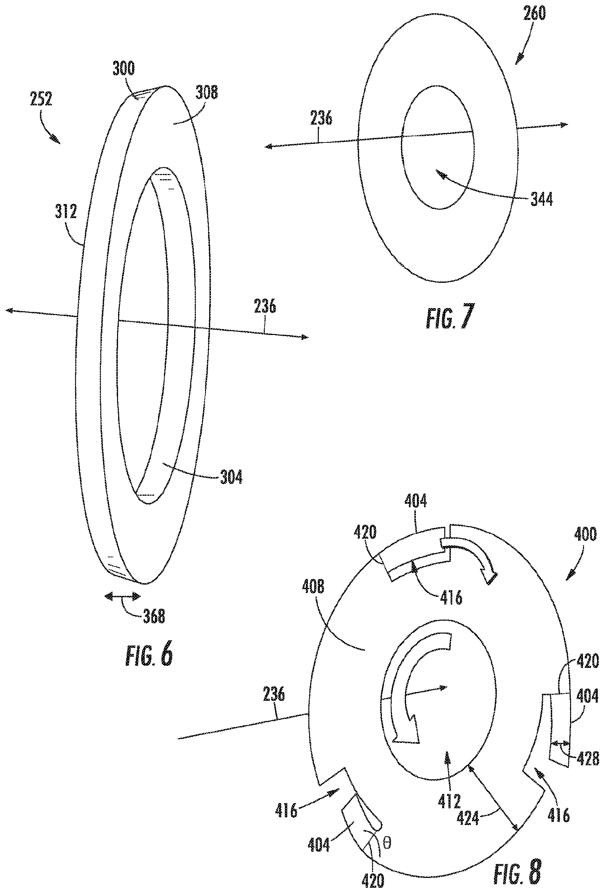

With reference to FIGs. 5 and 6, the seal support member 252 is located within the housing 216 between the bearing member 228 and the seal member 256 and between the flange 288 and the housing 216. The seal support member 252 is generally annular in shape and defines an outer tapered surface 300 (FIG. 6), an inner support surface 304 (FIG. 6), a bearing face 308 (FIG. 6), and an opposite seal face 312 (FIG. 6). The outer tapered surface 300 is configured to at least substantially match a taper of a tapered surface 316 (FIG. 5) of the housing 216. In one embodiment, the outer tapered surface 300 defines an angle of approximately of twenty degrees to sixty degrees relative to the longitudinal axis 236. Typically, the angle of the outer tapered surface 300 is substantially the same as an angle of the tapered surface 316 of the housing 216. When the outer tapered surface 300 is positioned against the tapered surface 316, the seal support member 252 is prevented from moving toward the worm 264.

The inner support surface 304 is spaced apart from the flange 288 of the collar 248. Accordingly, a gap 320 (FIG. 5) is defined between the inner support surface 304 and the flange 288.

The bearing face 308 is positioned against the bearing member 228. In particular, the bearing face 308 is positioned against the outer race 296 of the bearing member 228 and is spaced apart from the inner race 292. Therefore, during rotation of the driveshaft 220, the seal support member 252 remains stationary relative to the housing 216 and is spaced apart from rotating portions of the bearing 228. As a result the seal support member 252 is not subject to friction or wear during use of the table saw 100.

The seal face 312 of the seal support member 252 is opposite of the bearing face 308 and is positioned against the seal member 256. The seal face 312 defines a contour that is substantially the same as a contour of the seal member 256. As shown in FIG. 5, the contour of the seal face 312 is substantially flat to provide maximum contact between the seal face 312 and the seal member 256.

The seal support member 252, in one embodiment, is formed from a material that is substantially resistant to deformation to provide support for the seal member 256. Typically, the seal support member 252 is formed from a material that is harder than the material of the seal member 256. Suitable materials for forming the seal support member 252 include, metal, rubber, and the like. Additionally, the material of the seal support member 252 is typically unaffected by exposure to petroleum products and other types of lubricant.

With reference to FIG. 5, the seal member 256 is located within the housing 216 between the seal support member 252 and the worm 264 and between the collar 248 and the housing 216. The seal member 256 includes an inner seal 324, a diaphragm 328, and an outer seal 332. The inner seal 324 defines a shaft opening 334 through which the driveshaft 220 and the collar 243 extend. The inner seal 324 is positioned against the collar 248 to form a fluid tight seal between the inner seal and the seal surface 284 of the collar. The inner seal 324 extends radially away from the axis of rotation 236 of the driveshaft 220 for no more than a seal distance 338. The inner seal 324, and the rest of the seal member 256, is configured to remain stationary in response to rotation of the driveshaft 220. Thus, in at least some embodiments, the collar 248 rotates relative to the inner seal 324 in response to the electric motor 200 being energized. In another embodiment, the worm drive assembly 208 does not include the collar 248 and the inner seal 324 is positioned against the driveshaft 200.

The diaphragm 328 extends from the inner seal 324 to the outer seal 332 and is positioned against the seal surface 312 of the seal support member 252. The diaphragm 328 is a flexible portion of the seal member 256 positioned against the seal support structure 252. The diaphragm 328 extends radially away from the axis of rotation 236 for no more than a diaphragm distance 342.

The outer seal 332 is positioned against the housing 216 and a flange 336 defined by the housing, which prevents movement of the outer seal 332 toward the worm 264. The outer seal 332 is configured to form a fluid tight seal between seal member 256 and the housing 216. Accordingly, the seal member 256 is configured to seal (i.e. fluidly isolate) a cavity 340, defined mostly by the housing 216, from atmosphere. The cavity 340 extends between the seal member 256 and the bearing member 232. The worm 264 and the worm gear 268 are located in the cavity 340.

As further shown in FIG. 5, the shield member 260 is located within the housing 216 and is supported by the driveshaft 220. In particular, the shield member 260 is located within the cavity 340 between the collar 248 and the worm 264. The shield member 260 is annular in shape (washer / disc shaped) and defines a circular outer periphery 343 and an opening 344 (FIG. 7) through which the driveshaft 220 is configured to extend. The shield member 260 extends radially away from the axis of rotation 236 for no more than a shield distance 345. As shown in FIG. 5, the shield distance 345 is greater than the seal distance 338 and less than the diaphragm distance 342. In other embodiments the shield distance 345 is greater than or equal to the seal distance 338 and the diaphragm distance 342 is greater than the shield distance 345. The opening 344 is substantially the same size as the diameter of the driveshaft 220, but slightly larger to allow the driveshaft to extend therethrough. The shield member 260 is configured for rotation with the driveshaft 220, in at least one embodiment.

The shield member 260 extends radially away from the driveshaft 220 nearly to the outer seal 332, but is radially spaced apart from the outer seal and the flange 336. As a result, the shield member 260 extends across the inner seal 324 and most or all of the diaphragm 328. The shield member 260 is imperforate, except for the opening 344. The shield member 260 is formed from a generally rigid material such as metal, hard plastic, or other desired material.

With reference to FIG. 5, the worm 264 is located within the cavity 340 between the shield 260 and the bearing member 232. The worm 264 is configured for rotation with the driveshaft 220. The worm 264 is formed from metal or any other suitable material(s).

The worm gear 268 is located within the cavity 340 and is meshed with the worm 264. The worm gear 268 is fixedly mounted on an arbor shaft 348 of the arbor assembly 212. Accordingly, rotation of the worm gear 268 results in rotation of the arbor assembly 212 and any cutting blade 188 connected thereto. The worm gear 268 is formed from metal or any other suitable material(s).

In operation, the table saw 100 lubricates the worm 264 and the worm gear 268 with a lubricant / lubrication (not shown) contained in the cavity 340, in a manner that reduces friction and wear on the seal member 256, thereby resulting in a worm drive assembly 208 that prevents lubricant from leaking therefrom. The worm 264 and the worm gear 268 are partially submergible in a liquid lubricant. In response to rotation of the driveshaft 220, meshing of the worm 264 and the worm gear 268 may form a stream 356 (FIG. 5) of lubricant within the cavity 340 directed toward the seal member 256. If not for the shield member 260, the stream of lubricant 356 would be forced against the inner seal 324 and over time may damage the inner seal, resulting in a leakage of lubricant from between the inner seal 324 and the collar 248. Additionally, if not for the shield member 260, the stream of lubricant 356 would be forced against the diaphragm 328 and may move the diaphragm 328 and the inner seal 324 to a position that is prone to leakage. Furthermore, small pieces of debris from the worm 264, the worm gear 268, and other components within the cavity 340 may become suspended in the lubricant. If not for the shield member 260, the debris suspended in the stream of lubricant 356 (also referred to herein as a debris stream) would strike and gradually wear away the seal member 256, again potentially resulting in leakage of the lubricant from between the inner seal 324 and the collar 248.

The shield member 260 extends for a radial distance away from the axis of rotation 236 that blocks the stream of lubricant 356 from directly striking the inner seal 324 and the diaphragm 328 of the seal member 256. Since the shield member 260 extends radially farther from the axis of rotation than the inner seal 324, the stream of lubricant 356 avoids directly striking the inner seal 324 and instead directly strikes the shield member 260, which is generally impervious to wear and damage from the stream of lubricant and any debris suspended therein. The shield member 260 produces a deflected stream of lubricant 360 that is directed radially away from the longitudinal axis 236 against portions of the housing 216 that are also impervious to wear and damage from the stream of the lubricant 356, 360 and the debris suspended therein. Nonetheless, since the diaphragm distance 342 is greater than the shield distance 345 some of the lubricant may flow past the shield member 260 and occupy the space between the shield member 260 and the diaphragm 328; however, this lubricant does not forcibly travel past the shield member 260 in a damaging stream. Therefore, any lubricant and debris that does travel past the shield member 260 is prevented from damaging the seal member 256.

During operation, the seal support member 252 prevents the seal member 256 from moving in response to the movement of lubricant within the cavity 340. In embodiments of the cutting assembly 116 without the seal support member 252 a gap 364 (FIG. 5) between the diaphragm 328 and the bearing member 228 is unfilled. If the stream of lubricant 356 is strong enough, the diaphragm 328 and the inner seal 324 may be moved in response thereto, resulting in premature leakage / failure of the seal member 256.

The seal support member 252 fills most/all of any gap 364 between the diaphragm 328 of the seal member 256 and the bearing member 228 so that the diaphragm 328 is supported and prevented from moving in response to the stream of lubricant 356. In particular, a length 366 of the gap 364 is equal to a thickness 368 of the support member 252. Therefore, since the seal member 256 is moved less during operation of the table saw 100, the operable life of the seal member 256 is greatly extended and leakage is prevented.

The seal support member 252 also ensures that the seal member 256 is installed correctly during manufacture of the cutting assembly 116. In particular, the longitudinal thickness 368 of the seal support member 252 ensures that the outer seal 332 is seated properly against the flange 336 during assembly of the cutting assembly 116. Additionally, the seal support member 252 prevents the seal member 256 from being damaged by any portion of the collar 248 including the flange 288.

FIG. 8 illustrates another embodiment of a shield member 400 that includes wings 404 extending from a body 408. The shield member 400 is shown as including three of the wings 404, which are spaced apart from an opening 412 through the body 408. In other embodiments, the shield member 400 may include one to ten of the wings 404, which are also referred to herein as blades, fins, foils, or flutes. The wings 404 are formed at a periphery of the body 408 and are approximately evenly spaced around the periphery. A generally "L"-shaped opening 416 is formed between each wing 404 and the body 408. A crease 420 is defined at the junction of each wing 404 and the body 408, and wing angle Θ between each wing 404 and the body 408 is approximately forty-five degrees. In other embodiments, the wing angle Θ is twenty to eighty degrees or any other suitable magnitude. The wings 404 are angled toward the worm 264 when the shield member 400 is supported on the driveshaft 220. The body 408 defines a body width 424 and each wing 404 defines wing width 428. The wing width 428 is approximately one fourth of the body width 424 in the illustrated embodiment. In other embodiments the wing width 428 is one tenth to seven eighths of the body width 424.

In operation, the shield member 400 is rotated in response to rotation of the driveshaft 220. The shield member 400 is at least partially submerged in lubricant contained by the cavity 340, and as the wings 404 are rotated through the lubricant, the wings pump / propel the lubricant away from the seal member 256 and toward the worm 264 in a stream of lubricant (not shown). The stream of lubricant toward the worm 264 forms a low pressure region between the shield member 400 and the seal member 256 that further draws lubricant away from the seal member to protect the seal member from debris suspended in the lubricant and to prevent the seal member from moving in response to the stream of lubricant 356. Additionally, the body 408 of the shield member 400 blocks the stream of lubricant 356 and any debris suspended therein from directly striking the seal member 256 in the same manner as the shield member 260.

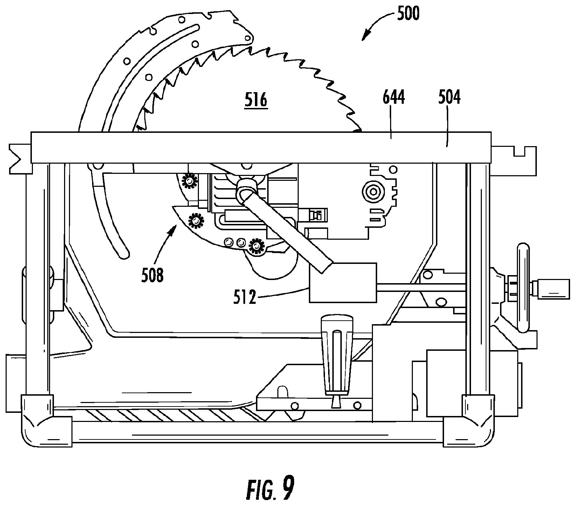

Figure 9 illustrates another embodiment of a table saw 500 that includes a tabletop 504, a cutting assembly 508, and a height adjustment mechanism 512. The height adjustment mechanism 512 is configured to move the cutting assembly 508 relative to the tabletop 504 to adjust a cutting depth of a cutting blade 516 attached to the cutting assembly.

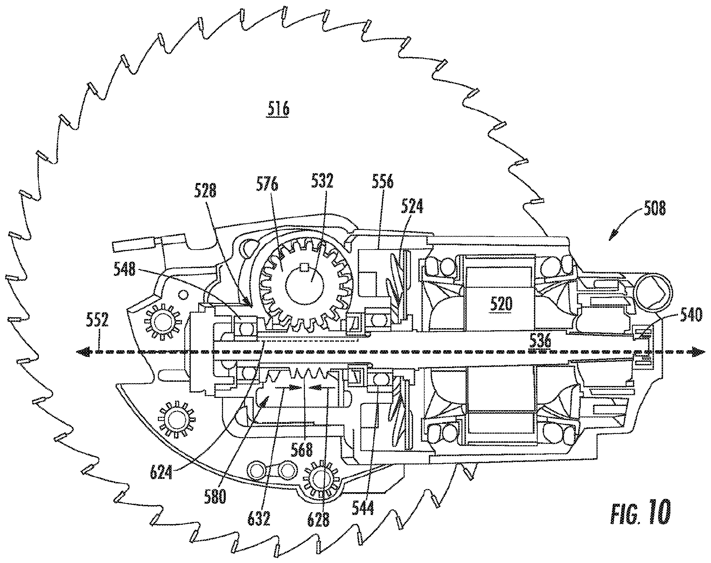

As shown in FIG. 10, the cutting assembly 508 includes an electric motor 520, a cooling fan 524, a worm drive assembly 528, and an arbor assembly 532 each at least partially located within a housing 556. The electric motor 520 includes a driveshaft 536 mounted for rotation within the housing 556. The electric motor 520 is configured to rotate the driveshaft 536 relative to the housing 556 when the electric motor is energized. Bearing members 540, 544, 548 are configured to rotatably support the driveshaft 536, which defines a longitudinal axis 552.

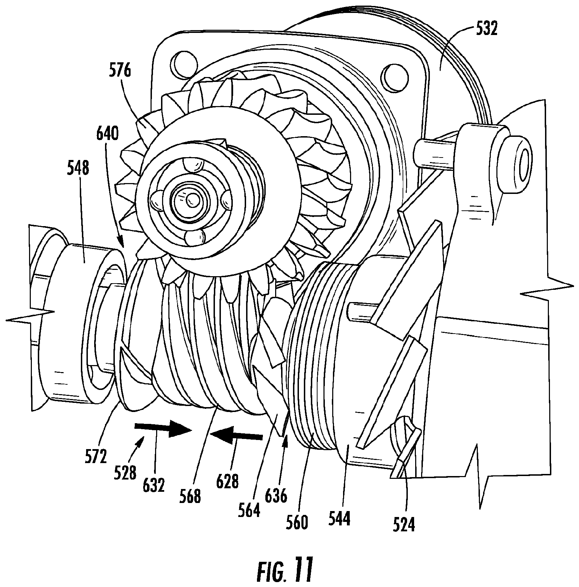

With reference to FIG. 11, the worm drive assembly 528 includes a seal member 560, a shield member 564, a worm 568, an impeller 572, and a worm gear 576 located within a cavity 580 of the housing 556. The seal member 560 is located on the driveshaft 536 between the bearing member 544 and the shield member 564. The seal member 560 is substantially identical to the seal member 256.

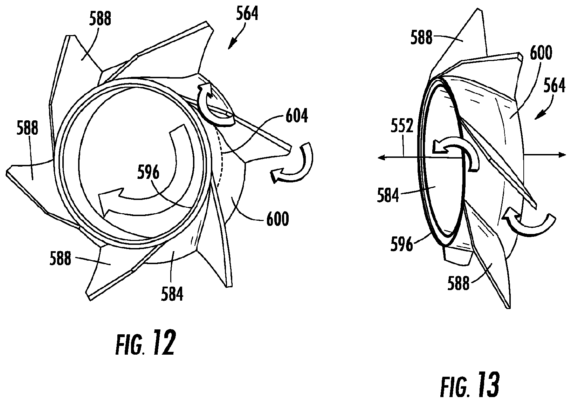

The shield member 564 is located on the driveshaft 536 between the seal member 560 and the worm 568 and is configured to rotate with the driveshaft. As shown in FIGs. 12 and 13, the shield member 564 includes a body 584 and a plurality of blades 588 extending away from the body. The body 584 defines an opening 592 through which the driveshaft 536 extends. The body 584 widens along the longitudinal axis 552 from a narrow front portion 596 to a wider rear portion 600. A shoulder 604 is defined near / at a junction of the front portion 596 and the rear portion 600.

The exemplary shield member of FIGs. 12 and 13 includes six of the blades 588. The blades 588 extend from the front portion 596 to the rear portion 600 of the body 584, and the blades extend away from the longitudinal axis 552. The blades 588 are shown as being generally trapezoidal in shape, but may have any desired shape in another embodiment. Also, in another embodiment, the shield member 564 may include one to ten of the blades 588.

The worm 568 and the worm gear 576 are substantially identical to the worm 264 and the worm gear 268.

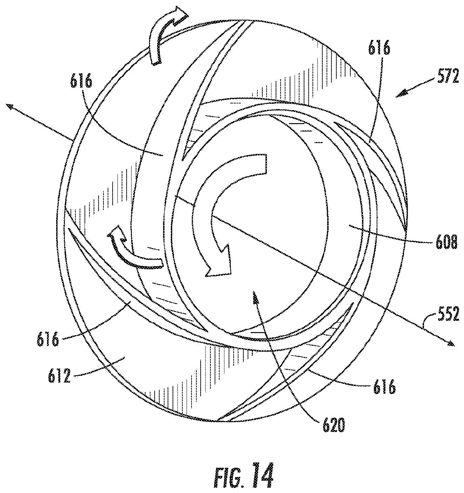

The impeller 572 is mounted on the driveshaft 536 between the worm 568 and the bearing member 548 and is configured to rotate with the driveshaft. As shown in FIG. 14, the impeller 572 includes a cylindrical portion 608, a body 612, and a plurality of blades 616. The cylindrical portion 608 defines an opening 620 configured to receive the driveshaft 536. The body 612 is imperforate (except for the opening 620) and extends away from the cylindrical portion 608. The blades 616 extend from cylindrical portion 608 to the body 612. In the illustrated embodiment, the impeller 572 includes four of the blades 616. In another embodiment, the impeller 572 includes one to ten of the blades 616.

With reference again to FIGs. 9 and 10, in operation the worm drive assembly 528 protects the seal member 560 and lubricates the worm 568 and the worm gear 576. In FIGs. 9 and 10, the cutting assembly 508 is shown near a position of maximum cutting depth in which the cutting assembly is generally level. In this position, the upper surface 624 of the lubricant extends across the worm drive assembly 528 and the portion of the driveshaft 536 extending between the bearing members 544, 548 is substantially submerged in the lubricant.

When the electric motor 520 is energized, the blades 588 of the shield member 564 generate a steam of lubricant 628 (FIG. 10) along the longitudinal axis 552 away from the seal member 560 and toward the worm 568, and the blades 616 of the impeller 572, which are moved through in the lubricant, generate another stream of lubricant 632 (FIG. 10) along the longitudinal axis 552 away from the bearing member 548 and toward the worm 568. Accordingly, the streams of lubricant 628, 632 flow in opposite directions and thus are opposed to each other. The opposing streams of lubricant 628, 632 result in a low pressure region 636 (FIG. 11) being formed between the shield member 564 and the seal member 560, and another low pressure region 640 (FIG. 11) being formed between the impeller 572 and the bearing member 548. The streams of lubricant 628, 632 keep the worm 568 and the worm gear 576 sufficiently lubricated for quiet, smooth, and cool operation.

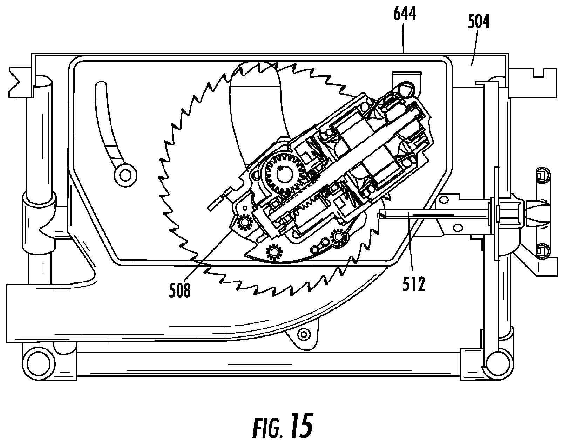

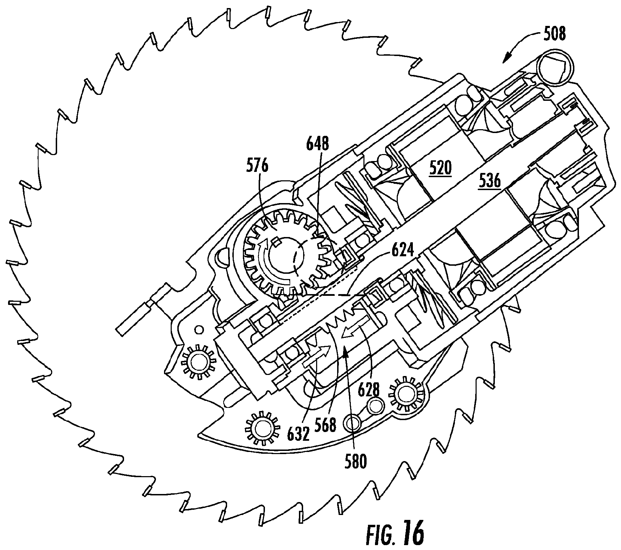

As shown in FIGs. 15 and 16, the cutting assembly 508 is shown near a position of minimum cutting depth in which cutting assembly has been pivoted / tilted to an angle of approximately forty-five degrees with respect to the driveshaft 536 and a workpiece support surface 644 of the tabletop 504. In this position, gravity causes the lubricant to pool away from the worm gear 576 and toward a bottom end of the worm 568. If the worm drive assembly 528 failed to include the impeller 572, then during operation an area 648 of the worm 568 and the worm gear 576 may be starved for lubricant (also referred to herein as an area of first contact between the worm 568 and the worm gear 576), resulting in increased friction, noise, and heat within the cavity 580. However, the impeller 572 addresses this issue by propelling lubricant to the area 648, thereby ensuring that the worm gear 576 and the worm 568 remain sufficiently lubricated in any position of the cutting assembly 508. Therefore, the impeller 572 and the shield member 564 ensure that the worm drive assembly 528 is properly lubricated for any selected cutting depth and bevel angle.

In some instances the cutting assembly 508 may be configured near the position of minimum cutting depth and operated with less than an optimal amount of lubricant within the cavity 580, such that the upper surface 624 of the lubricant is spaced apart from the shield member 564 and the shield member 564 is unable to pump any lubricant. In such a situation, the lubricant is concentrated near the impeller 572, which is configured to generate the stream of lubricant 632 that fully lubricates the worm drive assembly 528. Accordingly, the worm drive assembly 528 remains sufficiently lubricated even when low on lubricant.

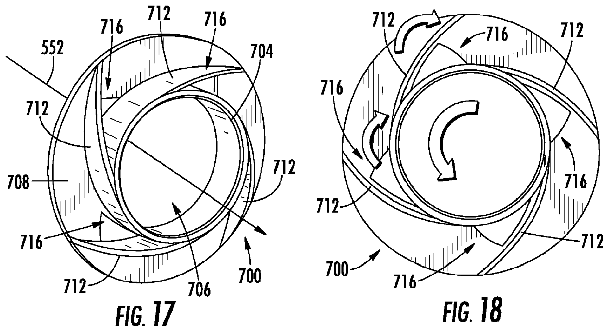

As shown in FIGs. 17 and 18, another embodiment of the impeller 700 is substantially identical to the impeller 572 and includes a cylindrical portion 704 defining an opening 706, a body 708, and a plurality of blades 712. In the illustrated embodiment, the impeller 700 defines four fluid windows 716 located near a junction of the blades and the cylindrical portion. The windows 716 extend through body 708 and are generally triangular in shape. In operation the windows 716 are configured to draw additional lubricant from between the impeller 700 and the bearing member 548 to increase the volume of the stream of lubricant 632. Accordingly, the lubricant of the stream of lubricant flows through the windows 716. In one embodiment, the impeller 700 defines the same number of windows 716 as the number of blades 712. In another embodiment, the impeller 700 defines any number of windows 716 from one to ten. Additionally, in another embodiment, the windows 716 are defined through any portion of the body 708 and have any desired shape.

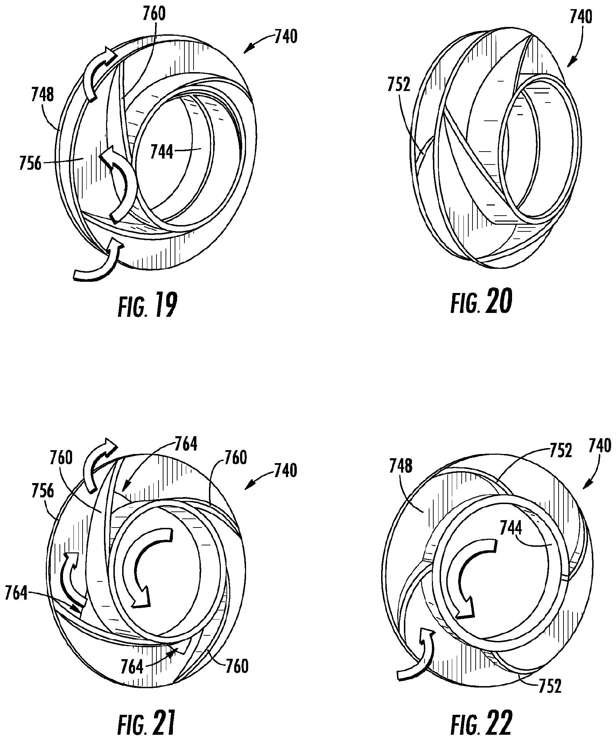

With reference to FIGs. 19-22, another embodiment of the impeller 740 includes a cylindrical portion 744, a first body 748, a first plurality of blades 752, a second body 756, a second plurality of blades 760, and a plurality of windows 764. The first body 748 and the second body 756 are stacked along the longitudinal axis 552 to form a dual wheel impeller. The first body 748 is similar to the impeller 572 (FIG. 14) and is shown isolated from the second body 756 in FIG. 22. The blades 752 are configured to draw lubricant from behind the body 748 and to direct the lubricant toward the cylindrical portion 744. Accordingly, the blades 760 are also referred to herein as fluid intake blades. The second body 756 is similar to the impeller 700 of FIGs. 17 and 18. The blades 760 of the second body 756 are configured in an opposite direction so that lubricant is drawn through the windows 764 and toward the worm 568. Accordingly, the dual wheel impeller 740 also creates the low pressure region 640 between the impeller and the bearing member 548. The impeller 740 may be formed according to any desired process including molding machining, die casting, forming, stamping, and welding. The impeller 740 may be formed from any desired material including metal and plastic.

As described herein a power tool includes a housing at least partially containing a driveshaft that is supported by a bearing member. A seal member is supported on the driveshaft within the housing and is configured to form a seal between the driveshaft and the housing. A seal support member is also supported by the driveshaft within the housing and is positioned between the bearing member and the seal member. The seal support member is configured to prevent movement of the seal member relative to the driveshaft. A worm is supported on the driveshaft within the housing for rotation with the driveshaft. The worm is configured to generate a stream of lubricant directed toward the seal member. A shield member is supported on the driveshaft within the housing between the seal member and the worm. The shield member is configured to divert the stream of lubricant away from the seal member.

## Claims

1. A table saw (100), including a worm drive, comprising
a driveshaft (220) configured to rotate about an axis of rotation (236) and a worm (264) configured for rotation with said driveshaft (220),
**characterized in that** the table saw (100) further comprises:
a seal member (256) including an inner seal (324) defining a shaft opening through which said driveshaft (220) extends, said inner seal (324) extending radially away from said axis of rotation (236) no more than a first distance (338); and
a shield (260) mounted on said driveshaft (220) between said worm (264) and said seal member (256), said shield (260) extending radially away from said axis of rotation (236) for at least a second distance (345) that is equal to or greater than said first distance (338),
wherein
said seal member (256) further includes an outer seal (332) and a diaphragm (328) extending from said inner seal (324) to said outer seal (332),
said diaphragm (328) extends radially away from said axis of rotation (236) no more than a third distance (342), and
said third distance (342) is greater than said second distance (345), the table saw further comprising:
a worm gear (268) meshed with said worm (264),
wherein said worm (264) and said worm gear (268) are at least partially submerged in a liquid lubricant,
wherein said driveshaft (220) is configured such that rotation of said driveshaft (220) causes the meshing of said worm (264) and said worm gear (268) to generate a stream of lubricant directed toward said seal member (256), and
said shield (260) is located between said stream of lubricant and said seal member (256) and is configured (i) to block said stream of lubricant from directly striking said inner seal (324), and (ii) to block partially said stream of lubricant from directly striking said diaphragm (328).

2. The table saw as claimed in claim 1, wherein:
said shield (260) defines a circular outer periphery (343), and
said shield (260) is imperforate except for a center opening (344) through which said driveshaft (220) extends.

3. The table saw as claimed in claim 1, wherein:
said shield (260) includes a body (408) and a plurality of wings (404) extending from said body (408),
a wing angle (Θ) is defined between said body (408) and said wings (404).

4. The table saw as claimed in claim 3, wherein:
said shield (260) is at least partially submerged in a liquid lubricant, and
said driveshaft (220) is configured such that rotation of said driveshaft (220) moves said plurality of wings (404) through said lubricant and causes said plurality of wings (404) to generate a stream of lubricant directed toward said worm (264).

5. The table saw as claimed in claim 1, further comprising:
an impeller (572) mounted on said driveshaft (220) for rotation with said driveshaft (220), said worm (264) located between said impeller (572) and said shield (260).

6. The table saw as claimed in claim 5, wherein:
said impeller (572) is at least partially submerged in a liquid lubricant,
said driveshaft (220) is configured such that rotation of said driveshaft (220) moves said impeller (572) through said lubricant and causes said impeller (572) to generate a first stream of lubricant (356) directed toward said worm (264), and
said shield (260) is located between said first stream of lubricant (356) and said seal member (256) and is configured (i) to block said first stream of lubricant (356) from directly striking said inner seal (324), and (ii) to block partially said first stream of lubricant (356) from directly striking said diaphragm (328).

7. The table saw as claimed in claim 6, wherein:
said shield (260) includes a plurality of wings (404),
said shield (260) is at least partially submerged in said liquid lubricant, and
said driveshaft (220) is configured such that rotation of said driveshaft (220) moves said plurality of wings (404) through said lubricant and causes said plurality of wings (404) to generate a second stream of lubricant (360) directed toward said worm (264).

8. The table saw as claimed in claim 5, wherein said impeller (572) defines a plurality of fluid windows (716) extending completely through said impeller (572).

9. The table saw as claimed in claim 8, wherein:
said impeller (572) is at least partially submerged in a liquid lubricant,
said driveshaft (220) is configured such that rotation of said driveshaft (220) moves said impeller (572) through said lubricant and causes said impeller (572) to generate a stream of lubricant (632) directed toward said worm (264), and
said stream of lubricant (632) passes through said plurality of fluid windows (716).

10. The table saw as claimed in claim 1, further comprising:
a bearing member (228) including an inner race (292) through which said driveshaft (220) extends; and
a support member (252) located between said bearing member (228) and said seal member (256).

11. The table saw as claimed in claim 10, wherein:
said seal member (256) further includes an outer seal (332) and a diaphragm (328) extending from said inner seal (324) to said outer seal (332),
a gap (320) separates said bearing member (228) from said diaphragm (328), said gap (320) defining a gap (320) length extending along said axis of rotation (236),
said support member (252) defines a thickness (368) along said axis of rotation (236), and
said gap (320) length is equal to said thickness (368).

12. The table saw as claimed in claim 10, wherein:
said seal member (256) further includes an outer seal (332) and a diaphragm (328) extending from said inner seal (324) to said outer seal (332), and
said support member (252) is configured to prevent movement of said diaphragm (328) toward said bearing member (228) along said axis of rotation (236).

13. A method of operating a table saw, comprising:
providing a driveshaft (220) rotating about an axis of rotation (236);
providing a worm (264) rotating with said driveshaft (220);
providing a seal member (256) including an inner seal (324) defining a shaft opening through which said driveshaft (220) extends, said inner seal (324) extending radially away from said axis of rotation (236) no more than a first distance (338); and
providing a shield (260) mounted on said driveshaft (220) between said worm (264) and said seal member (256), said shield (260) extending radially away from said axis of rotation (236) for at least a second distance (345) that is equal to or greater than said first distance (338),
wherein
said seal member (256) further includes an outer seal (332) and a diaphragm (328) extending from said inner seal (324) to said outer seal (332),
said diaphragm (328) extends radially away from said axis of rotation (236) no more than a third distance (342), and
said third distance (342) is greater than said second distance (345), the table saw further comprising:
a worm gear (268) meshed with said worm (264),
wherein said worm (264) and said worm gear (268) are at least partially submerged in a liquid lubricant,
the method further comprising rotating said driveshaft (220), causing the meshing of said worm (264) and said worm gear (268) to generate a stream of lubricant directed toward said seal member (256), whereby
said shield (260) blocks said stream of lubricant from directly striking said inner seal (324), and blocks partially said stream of lubricant from directly striking said diaphragm (328).

14. The method as claimed in claim 13, wherein:
said shield (260) includes a body (408) and a plurality of wings (404) extending from said body (408),
a wing angle (Θ) is defined between said body (408) and said wings (404).

15. The method as claimed in claim 14, comprising:
rotating said driveshaft (220) including said worm (264) mounted on said driveshaft (220) for rotation with said driveshaft (220);
generating a first stream of liquid lubricant (356) with said rotating worm (264); and
deflecting said first stream of liquid lubricant (356) away from a seal member (256) with a shield (260) located between said seal member (256) and said worm (264).

16. The method as claimed in claim 15, further comprising:
generating a second stream of liquid lubricant (360) with a plurality of wings (404) extending from said shield (260), said second stream of liquid lubricant (360) directed away from said seal member (256) and toward said worm (264).

17. The method as claimed in claim 16, further comprising:
generating a third stream of liquid lubricant (632) with an impeller (572) mounted on said driveshaft (220) for rotation with said driveshaft (220),
wherein said worm (264) is located between said impeller (572) and said shield (260), and
wherein said third stream of liquid lubricant (632) is directed toward said worm (264) and said shield (260).

18. The method as claimed in claim 17, further comprising:
deflecting said third stream of liquid lubricant (632) away from said seal member (256) with said shield (260).

19. The method as claimed in claim 17, further comprising:
tilting said driveshaft (220) such that at least a portion of said impeller (572) is submerged in said liquid lubricant and said plurality of wings (404) is not submerged in said liquid lubricant; and
rotating said driveshaft (220) to generate said third stream of liquid lubricant (632).

20. The method as claimed in claim 19, further comprising:
deflecting said third stream of liquid lubricant (632) away from said seal member (256) with said shield (260).

## Patentansprüche

1. Tischsäge (100), umfassend einen Schneckenantrieb, die Folgendes umfasst:
eine Antriebswelle (220), ausgelegt zum Rotieren um eine Rotationsachse (236), und
eine Schnecke (264), ausgelegt zur Rotation mit der Antriebswelle (220), **dadurch gekennzeichnet, dass** die Tischsäge (100) ferner Folgendes umfasst:
ein Dichtungselement (256), umfassend eine innere Dichtung (324), die eine Wellenöffnung definiert, durch die sich die Antriebswelle (220) erstreckt, wobei sich die innere Dichtung (324) nicht mehr als einen ersten Abstand (338) radial weg von der Rotationsachse (236) erstreckt; und
eine Abschirmung (260), montiert an der Antriebswelle (220) zwischen der Schnecke (264) und dem Dichtungselement (256), wobei sich die Abschirmung (260) um mindestens einen zweiten Abstand (345), der gleich oder größer als der erste Abstand (338) ist, radial weg von der Rotationsachse (236) erstreckt,
wobei das Dichtungselement (256) ferner eine äußere Dichtung (332) und eine Membran (328), die sich von der inneren Dichtung (324) zu der äußeren Dichtung (332) erstreckt, umfasst,
wobei sich die Membran (328) um nicht mehr als einen dritten Abstand (342) radial weg von der Rotationsachse (236) erstreckt, und
wobei der dritte Abstand (342) größer als der zweite Abstand (345) ist, wobei die Tischsäge ferner Folgendes umfasst:
ein Schneckenrad (268), verzahnt mit der Schnecke (264), wobei die Schnecke (264) und das Schneckenrad (268) zumindest teilweise in ein flüssiges Schmiermittel eingetaucht sind,
wobei die Antriebswelle (220) so ausgelegt ist, dass Rotation der Antriebswelle (220) die Verzahnung der Schnecke (264) und des Schneckenrads (268) veranlasst, einen auf das Dichtungselement (256) gerichteten Strom von Schmiermittel zu erzeugen, und wobei die Abschirmung (260) zwischen dem Strom von Schmiermittel und dem Dichtungselement (256) befindlich ist und ausgelegt ist zum (i) Hindern des Stroms von Schmiermittel am direkten Auftreffen auf die innere Dichtung (324), und (ii) teilweisen Hindern des Stroms von Schmiermittel am direkten Auftreffen auf die Membran (328).

2. Tischsäge nach Anspruch 1, wobei:
die Abschirmung (260) einen kreisförmigen äußeren Umfang (343) definiert, und
die Abschirmung (260) unperforiert ist, mit Ausnahme einer mittleren Öffnung (344), durch die sich die Antriebswelle (220) erstreckt.

3. Tischsäge nach Anspruch 1, wobei:
die Abschirmung (260) einen Körper (408) und mehrere Flügel (404) umfasst, die sich von dem Körper (408) ausgehend erstrecken,
ein Flügelwinkel (Θ) zwischen dem Körper (408) und den Flügeln (404) definiert ist.

4. Tischsäge nach Anspruch 3, wobei:
die Abschirmung (260) zumindest teilweise in ein flüssiges Schmiermittel eingetaucht ist, und
die Antriebswelle (220) so ausgelegt ist, dass Rotation der Antriebswelle (220) die mehreren Flügel (404) durch das Schmiermittel bewegt und die mehreren Flügel (404) veranlasst, einen auf die Schnecke (264) gerichteten Strom von Schmiermittel zu erzeugen.

5. Tischsäge nach Anspruch 1, die ferner Folgendes umfasst:
ein Laufrad (572), montiert an der Antriebswelle (220), zur Rotation mit der Antriebswelle (220), wobei die Schnecke (264) zwischen dem Laufrad (572) und der Abschirmung (260) befindlich ist.

6. Tischsäge nach Anspruch 5, wobei:
das Laufrad (572) zumindest teilweise in ein flüssiges Schmiermittel eingetaucht ist,
die Antriebswelle (220) so ausgelegt ist, dass Rotation der Antriebswelle (220) das Laufrad (572) durch das Schmiermittel bewegt und das Laufrad (572) veranlasst, einen auf die Schnecke (264) gerichteten ersten Strom von Schmiermittel (356) zu erzeugen, und
die Abschirmung (260) zwischen dem ersten Strom von Schmiermittel (356) und dem Dichtungselement (256) befindlich ist und ausgelegt ist zum (i) Hindern des ersten Stroms von Schmiermittel (356) an einem direkten Auftreten auf die innere Dichtung (324), und (ii) teilweisen Hindern des ersten Stroms von Schmiermittel (356) an einem direkten Auftreffen auf die Membran (328).

7. Tischsäge nach Anspruch 6, wobei:
die Abschirmung (260) mehrere Flügel (404) umfasst, die Abschirmung (260) zumindest teilweise in das flüssige Schmiermittel eingetaucht ist, und
die Antriebswelle (220) so ausgelegt ist, dass Rotation der Antriebswelle (220) die mehreren Flügel (404) durch das Schmiermittel bewegt und die mehreren Flügel (404) veranlasst, einen auf die Schnecke (264) gerichteten zweiten Strom von Schmiermittel (360) zu erzeugen.

8. Tischsäge nach Anspruch 5, wobei das Laufrad (572) mehrere Fluidfenster (716) definiert, die sich vollständig durch das Laufrad (572) erstrecken.

9. Tischsäge nach Anspruch 8, wobei:
das Laufrad (572) zumindest teilweise in ein flüssiges Schmiermittel eingetaucht ist,
die Antriebswelle (220) so ausgelegt ist, dass Rotation der Antriebswelle (220) das Laufrad (572) durch das Schmiermittel bewegt und das Laufrad (572) veranlasst, einen auf die Schnecke (264) gerichteten Strom von Schmiermittel (632) zu erzeugen, und
der Strom von Schmiermittel (632) durch die mehreren Fluidfenster (716) hindurch strömt.

10. Tischsäge nach Anspruch 1, die ferner Folgendes umfasst:
ein Lagerelement (228), umfassend einen Innenring (292), durch den sich die Antriebswelle (220) erstreckt; und
ein Stützelement (252), befindlich zwischen dem Lagerelement (228) und dem Dichtungselement (256).

11. Tischsäge nach Anspruch 10, wobei:
das Dichtungselement (256) ferner eine äußere Dichtung (332) und eine Membran (328), die sich von der inneren Dichtung (324) zu der äußeren Dichtung (332) erstreckt, umfasst,
ein Zwischenraum (320) das Lagerelement (228) von der Membran (328) trennt, wobei der Zwischenraum (320) eine Länge des Zwischenraums (320) definiert, die sich entlang der Rotationsachse (236) erstreckt,
das Stützelement (252) eine Dicke (368) entlang der Rotationsachse (236) definiert, und
die Länge des Zwischenraums (320) gleich der Dicke (368) ist.

12. Tischsäge nach Anspruch 10, wobei:
das Dichtungselement (256) ferner eine äußere Dichtung (332) und eine Membran (328), die sich von der inneren Dichtung (324) zu der äußeren Dichtung (332) erstreckt, umfasst, und
das Stützelement (252) ausgelegt ist zum Verhindern von Bewegung der Membran (328) zum Lagerelement (228) entlang der Rotationsachse (236).

13. Verfahren zum Betreiben einer Tischsäge, das Folgendes umfasst:
Bereitstellen einer Antriebswelle (220), die um eine Rotationsachse (236) rotiert;
Bereitstellen einer Schnecke (264), die mit der Antriebswelle (220) rotiert;
Bereitstellen eines Dichtungselements (256), umfassend eine innere Dichtung (324), die eine Wellenöffnung definiert, durch die sich die Antriebswelle (220) erstreckt, wobei sich die innere Dichtung (324) nicht mehr als einen ersten Abstand (338) radial weg von der Rotationsachse (236) erstreckt; und
Bereitstellen einer Abschirmung (260), montiert an der Antriebswelle (220) zwischen der Schnecke (264) und dem Dichtungselement (256), wobei sich die Abschirmung (260) um mindestens einen zweiten Abstand (345), der gleich oder größer als der erste Abstand (338) ist, radial weg von der Rotationsachse (236) erstreckt,
wobei das Dichtungselement (256) ferner eine äußere Dichtung (332) und eine Membran (328), die sich von der inneren Dichtung (324) zu der äußeren Dichtung (332) erstreckt, umfasst,
wobei sich die Membran (328) um nicht mehr als einen dritten Abstand (342) radial weg von der Rotationsachse (236) erstreckt, und
wobei der dritte Abstand (342) größer als der zweite Abstand (345) ist, wobei die Tischsäge ferner Folgendes umfasst:
ein Schneckenrad (268), verzahnt mit der Schnecke (264), wobei die Schnecke (264) und das Schneckenrad (268) zumindest teilweise in ein flüssiges Schmiermittel eingetaucht sind,
wobei das Verfahren ferner Rotieren der Antriebswelle (220) umfasst, was die Verzahnung der Schnecke (264) und des Schneckenrads (268) veranlasst, einen auf das Dichtungselement (256) gerichteten Strom von Schmiermittel zu erzeugen, wobei
die Abschirmung (260) den Strom von Schmiermittel hindert, direkt auf die innere Dichtung (324) aufzutreffen, und den Strom von Schmiermittel teilweise hindert, direkt auf die Membran (328) aufzutreffen.

14. Verfahren nach Anspruch 13, wobei:
die Abschirmung (260) einen Körper (408) und mehrere Flügel (404) umfasst, die sich von dem Körper (408) ausgehend erstrecken,
ein Flügelwinkel (Θ) zwischen dem Körper (408) und den Flügeln (404) definiert ist.

15. Verfahren nach Anspruch 14, das Folgendes umfasst:
Rotieren der Antriebswelle (220), umfassend die Schnecke (264), montiert an der Antriebswelle (220) zur Rotation mit der Antriebswelle (220);
Erzeugen eines ersten Stroms von flüssigem Schmiermittel (356) mit der rotierenden Schnecke (264); und
Ablenken des ersten Stroms von flüssigem Schmiermittel (356) weg vom Dichtungselement (256) mit einer Abschirmung (260), befindlich zwischen dem Dichtungselement (256) und der Schnecke (264).

16. Verfahren nach Anspruch 15, das ferner Folgendes umfasst:
Erzeugen eines zweiten Stroms von flüssigem Schmiermittel (360) mit mehreren Flügeln (404), die sich von der Abschirmung (260) ausgehend erstrecken, wobei der zweite Strom von flüssigem Schmiermittel (360) weg vom Dichtungselement (256) und auf die Schnecke (264) gerichtet ist.

17. Verfahren nach Anspruch 16, das ferner Folgendes umfasst:
Erzeugen eines dritten Stroms von flüssigem Schmiermittel (632) mit einem Laufrad (572), montiert an der Antriebswelle (220) zur Rotation mit der Antriebswelle (220),
wobei die Schnecke (264) zwischen dem Laufrad (572) und der Abschirmung (260) befindlich ist, und
wobei der dritte Strom von flüssigem Schmiermittel (632) auf die Schnecke (264) und die Abschirmung (260) gerichtet ist.

18. Verfahren nach Anspruch 17, das ferner Folgendes umfasst:
Ablenken des dritten Stroms von flüssigem Schmiermittel (632) weg vom Dichtungselement (256) mit der Abschirmung (260) .

19. Verfahren nach Anspruch 17, das ferner Folgendes umfasst:
Neigen der Antriebswelle (220), sodass zumindest ein Teil des Laufrads (572) in das flüssige Schmiermittel eingetaucht ist und die mehreren Flügel (404) nicht in das flüssige Schmiermittel eingetaucht sind; und
Rotieren der Antriebswelle (220) zum Erzeugen des dritten Stroms von flüssigem Schmiermittel (632).

20. Verfahren nach Anspruch 19, das ferner Folgendes umfasst:
Ablenken des dritten Stroms von flüssigem Schmiermittel (632) weg vom Dichtungselement (256) mit der Abschirmung (260) .

## Revendications

1. Scie à table (100), incluant un entraînement à vis sans fin, comprenant
un arbre d'entraînement (220) configuré pour entrer en rotation autour d'un axe de rotation (236) et
une vis sans fin (264) configurée en vue d'une rotation avec ledit arbre d'entraînement (220), **caractérisée en ce que** la scie à table (100) comprend en outre :
un élément formant joint (256) incluant un joint interne (324) définissant une ouverture d'arbre à travers laquelle ledit arbre d'entraînement (220) s'étend, ledit joint interne (324) s'étendant radialement à l'écart dudit axe de rotation (236) de pas plus d'une première distance (338) ; et
un écran (260) monté sur ledit arbre d'entraînement (220) entre ladite vis sans fin (264) et ledit élément formant joint (256), ledit écran (260) s'étendant radialement à l'écart dudit axe de rotation (236) d'au moins une deuxième distance (345) qui est égale ou supérieure à ladite première distance (338),
dans laquelle ledit élément formant joint (256) inclut en outre un joint externe (332) et un diaphragme (328) s'étendant dudit joint interne (324) audit joint externe (332),
ledit diaphragme (328) s'étend radialement à l'écart dudit axe de rotation (236) de pas plus d'une troisième distance (342), et
ladite troisième distance (342) est supérieure à ladite deuxième distance (345), la scie à table comprenant en outre :
un engrenage à vis sans fin (268) engrené avec ladite vis sans fin (264),
dans laquelle ladite vis sans fin (264) et ledit engrenage à vis sans fin (268) sont au moins partiellement immergés dans un lubrifiant liquide,
dans laquelle ledit arbre d'entraînement (220) est configuré de telle sorte que la rotation dudit arbre d'entraînement (220) amène l'engrènement de ladite vis sans fin (264) et dudit engrenage à vis sans fin (268) pour générer un flux de lubrifiant dirigé vers ledit élément formant joint (256), et
ledit écran (260) est situé entre ledit flux de lubrifiant et ledit élément formant joint (256) et est configuré (i) pour empêcher ledit flux de lubrifiant de frapper directement ledit joint interne (324), et (ii) pour empêcher partiellement ledit flux de lubrifiant de frapper directement ledit diaphragme (328).

2. Scie à table telle que revendiquée dans la revendication 1, dans laquelle :
ledit écran (260) définit une périphérie externe circulaire (343), et
ledit écran (260) est non perforé à l'exception d'une ouverture centrale (344) à travers laquelle ledit arbre d'entraînement (220) s'étend.

3. Scie à table telle que revendiquée dans la revendication 1, dans laquelle :
ledit écran (260) inclut un corps (408) et une pluralité d'ailes (404) s'étendant à partir dudit corps (408),
un angle d'ailes (θ) est défini entre ledit corps (408) et lesdites ailes (404).

4. Scie à table telle que revendiquée dans la revendication 3, dans laquelle :
ledit écran (260) est au moins partiellement immergé dans un lubrifiant liquide, et
ledit arbre d'entraînement (220) est configuré de telle sorte que la rotation dudit arbre d'entraînement (220) déplace ladite pluralité d'ailes (404) à travers ledit lubrifiant et amène ladite pluralité d'ailes (404) à générer un flux de lubrifiant dirigé vers ladite vis sans fin (264).

5. Scie à table telle que revendiquée dans la revendication 1, comprenant en outre :
un impulseur (572) monté sur ledit arbre d'entraînement (220) en vue d'une rotation avec ledit arbre d'entraînement (220), ladite vis sans fin (264) étant située entre ledit impulseur (572) et ledit écran (260).

6. Scie à table telle que revendiquée dans la revendication 5, dans laquelle :
ledit impulseur (572) est au moins partiellement immergé dans un lubrifiant liquide,
ledit arbre d'entraînement (220) est configuré de telle sorte que la rotation dudit arbre d'entraînement (220) déplace ledit impulseur (572) à travers ledit lubrifiant et amène ledit impulseur (572) à générer un premier flux de lubrifiant (356) dirigé vers ladite vis sans fin (264), et
ledit écran (260) est situé entre ledit premier flux de lubrifiant (356) et ledit élément formant joint (256) et est configuré (i) pour empêcher ledit premier flux de lubrifiant (356) de frapper directement ledit joint interne (324), et (ii) pour empêcher partiellement ledit premier flux de lubrifiant (356) de frapper directement ledit diaphragme (328).

7. Scie à table telle que revendiquée dans la revendication 6, dans laquelle :
ledit écran (260) inclut une pluralité d'ailes (404),
ledit écran (260) est au moins partiellement immergé dans ledit lubrifiant liquide, et
ledit arbre d'entraînement (220) est configuré de telle sorte que la rotation dudit arbre d'entraînement (220) déplace ladite pluralité d'ailes (404) à travers ledit lubrifiant et amène ladite pluralité d'ailes (404) à générer un deuxième flux de lubrifiant (360) dirigé vers ladite vis sans fin (264).

8. Scie à table selon la revendication 5, dans laquelle ledit impulseur (572) définit une pluralité de fenêtres de fluide (716) s'étendant complètement à travers ledit impulseur (572).

9. Scie à table telle que revendiquée dans la revendication 8, dans laquelle :
ledit impulseur (572) est au moins partiellement immergé dans un lubrifiant liquide,
ledit arbre d'entraînement (220) est configuré de telle sorte que la rotation dudit arbre d'entraînement (220) déplace ledit impulseur (572) à travers ledit lubrifiant et amène ledit impulseur (572) à générer un flux de lubrifiant (632) dirigé vers ladite vis sans fin (264), et
ledit flux de lubrifiant (632) passe à travers ladite pluralité de fenêtres de fluide (716).

10. Scie à table telle que revendiquée dans la revendication 1, comprenant en outre :
un élément formant palier (228) incluant un chemin de roulement interne (292) à travers lequel ledit arbre d'entraînement (220) s'étend ; et
un élément de support (252) situé entre ledit élément formant palier (228) et ledit élément formant joint (256) .

11. Scie à table telle que revendiquée dans la revendication 10, dans laquelle :
ledit élément formant joint (256) inclut en outre un joint externe (332) et un diaphragme (328) s'étendant dudit joint interne (324) audit joint externe (332),
un espace (320) sépare ledit élément formant palier (228) dudit diaphragme (328), ledit espace (320) définissant une longueur d'espace (320) s'étendant le long dudit axe de rotation (236),
ledit élément de support (252) définit une épaisseur (368) le long dudit axe de rotation (236), et
ladite longueur d'espace (320) est égale à ladite épaisseur (368).

12. Scie à table telle que revendiquée dans la revendication 10, dans laquelle :
ledit élément formant joint (256) inclut en outre un joint externe (332) et un diaphragme (328) s'étendant dudit joint interne (324) audit joint externe (332), et
ledit élément de support (252) est configuré pour prévenir le déplacement dudit diaphragme (328) vers ledit élément formant palier (228) le long dudit axe de rotation (236).

13. Procédé pour faire fonctionner une scie à table, comprenant :
la fourniture d'un arbre d'entraînement (220) entrant en rotation autour d'un axe de rotation (236) ;
la fourniture d'une vis sans fin (264) entrant en rotation avec ledit arbre d'entraînement (220) ;
la fourniture d'un élément formant joint (256) incluant un joint interne (324) définissant une ouverture d'arbre à travers laquelle ledit arbre d'entraînement (220) s'étend, ledit joint interne (324) s'étendant radialement à l'écart dudit axe de rotation (236) de pas plus d'une première distance (338) ; et
la fourniture d'un écran (260) monté sur ledit arbre d'entraînement (220) entre ladite vis sans fin (264) et ledit élément formant joint (256), ledit écran (260) s'étendant radialement à l'écart dudit axe de rotation (236) d'au moins une deuxième distance (345) qui est égale ou supérieure à ladite première distance (338),
dans laquelle ledit élément formant joint (256) inclut en outre un joint externe (332) et un diaphragme (328) s'étendant dudit joint interne (324) audit joint externe (332),
ledit diaphragme (328) s'étend radialement à l'écart dudit axe de rotation (236) de pas plus d'une troisième distance (342), et
ladite troisième distance (342) est supérieure à ladite deuxième distance (345), la scie à table comprenant en outre :
un engrenage à vis sans fin (268) engrené avec ladite vis sans fin (264),
dans laquelle ladite vis sans fin (264) et ledit engrenage à vis sans fin (268) sont au moins partiellement immergés dans un lubrifiant liquide,
le procédé comprenant en outre la mise en rotation dudit arbre d'entraînement (220), amenant l'engrènement de ladite vis sans fin (264) et dudit engrenage à vis sans fin (268) pour générer un flux de lubrifiant dirigé vers ledit élément formant joint (256), grâce à quoi ledit écran (260) empêche ledit flux de lubrifiant de frapper directement ledit joint interne (324), et empêche partiellement ledit flux de lubrifiant de frapper directement ledit diaphragme (328).

14. Procédé tel que revendiqué dans la revendication 13, dans lequel :
ledit écran (260) inclut un corps (408) et une pluralité d'ailes (404) s'étendant à partir dudit corps (408),
un angle d'ailes (θ) est défini entre ledit corps (408) et lesdites ailes (404).

15. Procédé tel que revendiqué dans la revendication 14, comprenant :
la mise en rotation dudit arbre d'entraînement (220) incluant ladite vis sans fin (264) montée sur ledit arbre d'entraînement (220) en vue d'une rotation avec ledit arbre d'entraînement (220) ;
la génération d'un premier flux de lubrifiant liquide (356) avec ladite vis sans fin rotative (264) ; et
la déviation dudit premier flux de lubrifiant liquide (356) à l'écart d'un élément formant joint (256) avec un écran (260) situé entre ledit élément formant joint (256) et ladite vis sans fin (264).

16. Procédé tel que revendiqué dans la revendication 15, comprenant en outre :
la génération d'un deuxième flux de lubrifiant liquide (360) avec une pluralité d'ailes (404) s'étendant à partir dudit écran (260), ledit deuxième flux de lubrifiant liquide (360) étant dirigé à l'écart dudit élément formant joint (256) et vers ladite vis sans fin (264) .

17. Procédé tel que revendiqué dans la revendication 16, comprenant en outre :
la génération d'un troisième flux de lubrifiant liquide (632) avec un impulseur (572) monté sur ledit arbre d'entraînement (220) en vue d'une rotation avec ledit arbre d'entraînement (220),
dans laquelle ladite vis sans fin (264) est située entre ledit impulseur (572) et ledit écran (260), et
dans laquelle ledit troisième flux de lubrifiant liquide (632) est dirigé vers ladite vis sans fin (264) et ledit écran (260).

18. Procédé tel que revendiqué dans la revendication 17, comprenant en outre :
la déviation dudit troisième flux de lubrifiant liquide (632) à l'écart dudit élément formant joint (256) avec ledit écran (260).

19. Procédé tel que revendiqué dans la revendication 17, comprenant en outre :
l'inclinaison dudit arbre d'entraînement (220) de telle soit immergée dans ledit lubrifiant liquide et que ladite pluralité d'ailes (404) ne soit pas immergée dans ledit lubrifiant liquide ; et
la rotation dudit arbre d'entraînement (220) pour générer ledit troisième flux de lubrifiant liquide (632) .

20. Procédé tel que revendiqué dans la revendication 19, comprenant en outre :
la déviation dudit troisième flux de lubrifiant liquide (632) à l'écart dudit élément formant joint (256) avec ledit écran (260).
